# EUROPEAN PATENT SPECIFICATION

(11) **EP 1 835 383 B1**
(45) Date of publication and mention of the grant of the patent: **04.12.2013**
(21) Application number: 06111131.6
(22) Date of filing: 14.03.2006
(51) Int. Cl.: G06F 3/0481

(54) **Screen display in application switching**
Bildschirmanzeige bei einer Anwendungsschaltung
Affichage sur écran dans la commutation d'applications

(43) Date of publication of application: 19.09.2007
(73) Proprietor: BlackBerry Limited, Waterloo, ON N2K 0A7 (CA)
(72) Inventor: Yach, David, Waterloo, Ontario N2K 2N1 (CA); Klassen, Gerhard D., Waterloo, Ontario N2T 1H7 (CA)
(74) Representative: Moore, Barry

(56) References cited:
- EP-A- 0 422 577
- EP-A- 1 189 131
- EP-A1- 1 251 515
- US-A- 5 949 418
- US-A1- 2002 026 474
- US-A1- 2003 117 440

## Description

A device may have two or more applications running concurrently. For example, a user of a personal digital assistant (PDA) may activate an e-mail application, a calendar application, an instant messaging (IM) application and the "home page" of the PDA. The display of a PDA is small, so usually only one of the running applications has its screen shown on the display at any given time. The device may have a task-switching program to enable a user to select which application has its screen shown on the display.

US2002/0026474 discloses a Windows®-like task bar on the lowest part of a screen of a PDA. The task bar has "TABS" (representations of applications) so that a user of the PDA can select a representation to select an application. The task bar is displayed in the foreground of the screen such that none of its parts are obscured by any other display window. A "current application" is displayed in an "initial default screen" area.

US2003/0117440 discloses a device in which icons are presented in the foreground of a screen of the device, on top of a "current application". In addition, preview windows for applications are presented in the foreground of the screen, on top of the "current application". The preview screens are smaller than the area dedicated for the "current application" on the screen.

US5949418 discloses a portable computing device having a program taskbar that presents a program icon representing a program that is active within a graphical window. The device operating system is configured to minimize the graphical window to remove the graphical window from the viewing area or to enlarge the graphical window to restore the graphical window in the viewing area in response to contacting the program icon.

EP1251515 discloses a method for selecting a position in a video stream. A temporally ordered collection of key frames is obtained for the video stream. A portion of the collection is displayed in a scroll area. A current key frame occupying a playback area can be actuated to initiate playback of the video stream at the location corresponding to the current key frame. Upon actuation of a next key frame occupying the forward area, the collection of key frames is scrolled through the scroll area in a forward direction, and upon actuation of a previous key frame occupying the backward area, the collection of key frames is scrolled through the scroll area in a backward direction. In a 'scroll forward' mode of operation, during the scrolling in the forward direction, the next key frame is displayed in a substantially full-screen fashion in the display area. Displaying in this fashion gives the user a better look at the key frames during the scrolling operation.

In a main aspect, the invention provides a method for enabling a user to switch between applications running on a device having a display, the method comprising: showing a first screen of a current state of a first application on said display; showing a subscreen comprising said representations of said applications in a foreground of said display thereby obscuring a portion of said first screen comprising a background of said display; enabling said user to navigate through said representations and to indicate to which of said applications to switch by selecting a corresponding one of said representations; and as said user navigates to a representation of a second application, showing a second screen of a current state of said second application on said display instead of said first screen and showing said subscreen comprising said representations in the foreground of said display thereby obscuring a portion of said second screen comprising the background of said display.

An application-switching program displays representations of applications, for example icons, on a screen of a device. As a user of the device navigates between the representations, a screen of the application to a representation of which the user has currently navigated is shown in the background of the display. Showing the screen in the background of the display provides additional feedback to the user regarding the navigation and may assist the user in deciding whether to switch to that application. It also enables the user to monitor the application to a representation of which the user has currently navigated without switching to the application.

The location of the representations may be a fixed position in the display or may be determined to lessen the amount of information in the screen that is obscured by the representations. If certain areas of the screen are more important than others, the location may be determined to lessen the amount of information in those certain areas that is obscured by the representations.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is an illustration of an exemplary device, according to some embodiments;

Figure 2 is a block diagram of an exemplary device, according to some embodiments;

Figure 3 is a flowchart of an exemplary method implemented by an instant messaging client on a device, according to some embodiments; and

Figures 4 - 9 are illustrations of an exemplary device and its display, according to some embodiments.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

According to embodiments of the invention, an application-switching program may display representations of applications, for example icons, on a screen of a device.

As a user of the device navigates between the representations, a screen of the application to a representation of which the user has currently navigated is shown in the background of the display. Showing the screen in the background of the display provides additional feedback to the user regarding the navigation and may assist the user in deciding whether to switch to that application. It also enables the user to monitor the application to a representation of which the user has currently navigated without switching to the application.

An appropriate location in the display for the representations may be determined. For example, the location may be fixed at the center of the display. Alternatively, the location may be determined so as to lessen the amount of information in the screen that is obscured by the representations. Alternatively, if certain areas of the screen are more important than others, the location may be determined so as to reduce the amount of those important areas that is obscured by the representations.

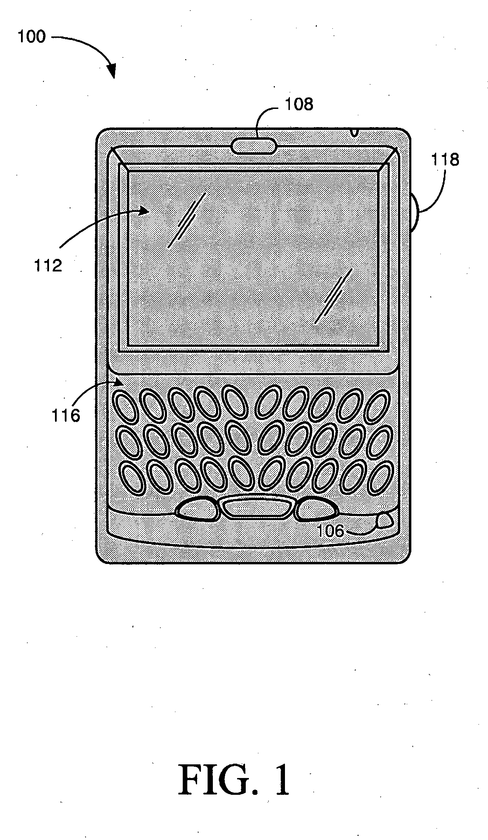

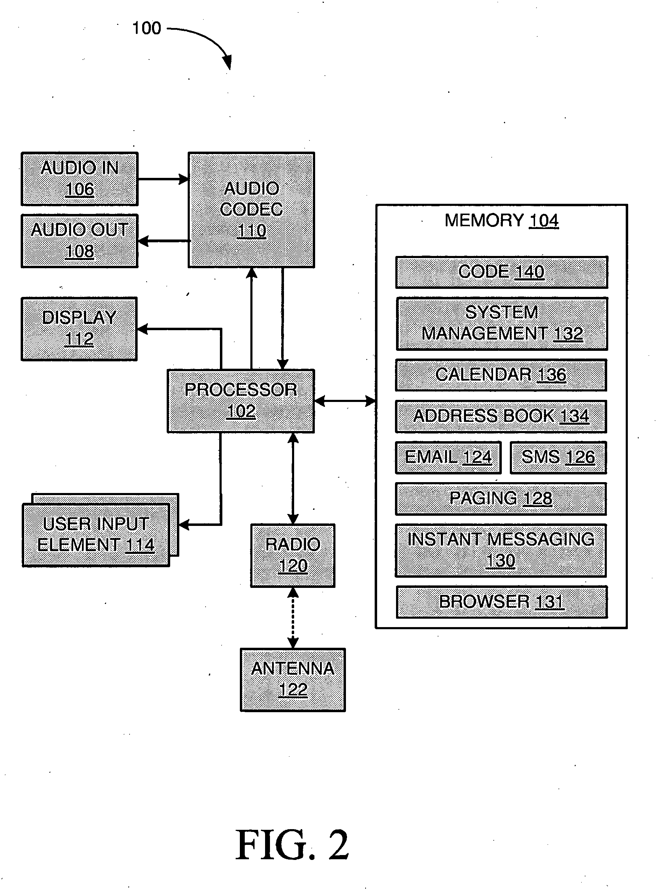

Reference is made now to Figures 1 and 2. Figure 1 is an illustration of an exemplary device 100, according to some embodiments, and Figure 2 is a block diagram of device 100, according to some embodiments. For clarity, some components and features of device 100 are not shown in Figures 1 and 2 and are not described explicitly below.

Device 100 includes a processor 102 and a memory 104 coupled to processor 102. Device 100 includes an audio input element 106, for example a microphone, an audio output element 108, for example, a speaker, and an audio coder-decoder (codec) 110, however, embodiments of the invention are also applicable to devices without these audio components.

Device 100 includes a display 112 coupled to processor 102. Device 100 also includes one or more user input elements 114 coupled to processor 102, for example, a keyboard 116 and a thumbwheel 118. Device 100 may include additional user input and/or output elements that are not shown in Figure 1, for example a trackball. Keyboard 116 may be embedded in full or in part within display 112, i.e. display 112 may be a touch screen.

Device 100 includes a radio 120, compatible with one or more wireless communication standards, coupled to processor 102 and an antenna 122 coupled to radio 120. By way of radio 120, antenna 122 and a communication infrastructure (not shown) that is external to device 100, device 100 may be able to establish telephone and/or data communication sessions with other systems (not shown). However, embodiments of the invention are also applicable to devices without these wireless communication components.

Data communication sessions may include data in the form of plain text, data files, voice files, image files, movie files, streaming audio, streaming video, animation, or any other suitable data form. A non-exhaustive list of examples for data communication sessions includes sending and receiving electronic mail (e-mail), sending and receiving instant messages, sending and receiving paging messages, sending and receiving short message service (SMS) messages, and any other suitable data communication sessions. For data communications supported by device 100, memory 104 may store respective application modules to be executed by processor 102, for example, an e-mail application module 124, an SMS application module 126, a paging application module 128, an instant messaging application module 130, and a web browser application module 131.

Memory 104 stores a system management application module 132 and may optionally store other application modules, for example, an address book or contacts application module 134 and a calendar application module 136.

These application modules are just examples and embodiments of the invention are also applicable to devices with a different set of application modules.

For the purpose of the description and the claims, several terms are defined hereinbelow: a) an application is considered "running" if system management application module 132 or a user of device 100 previously selected that application for execution, and execution of that application is not yet terminated; and b) an application is considered "active" if it is running and a screen associated with that application is displayed on display 112. System management application module 132 may be considered running at all times.

According to some embodiments, memory 104 may store executable code 140 which, when executed by processor 102, enables a user to switch between applications running on device 100. The application to which a user has switched will have at least one of its screens shown in display 112.

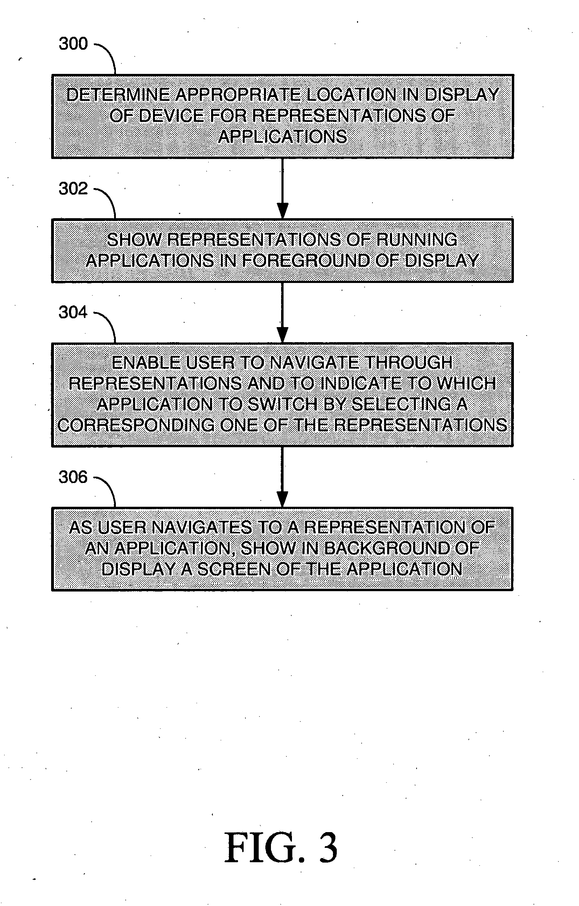

Figure 3 is a flowchart of an exemplary method to be implemented by code 140, according to some embodiments.

At 300, an appropriate location in display 112 for representations of running applications may be determined. For example, the location may be fixed at the center of display 112. Alternatively, the location may be determined so as to reduce the amount of information in the screen that is obscured by the representations. Alternatively, if certain areas of the screen are more important than others, the location may be determined so as to reduce the amount of those important areas that is obscured by the representations.

At 302, representations of running applications are shown in the foreground of display 112.

At 304, navigation through the representations by a user of device 100 is enabled. The user uses at least one user input element 114 to navigate through the representations. Using at least one user input element 114, the user may indicate to device 100 to which application to switch by selecting a corresponding one of the representations. For example, the user may navigate through the representations by rolling thumbwheel 118 and may select a representation by activating a tactile switching action of thumbwheel 118.

At 306, as the user navigates, a screen of the application to a representation of which the user has currently navigated is shown in the background of display 112.

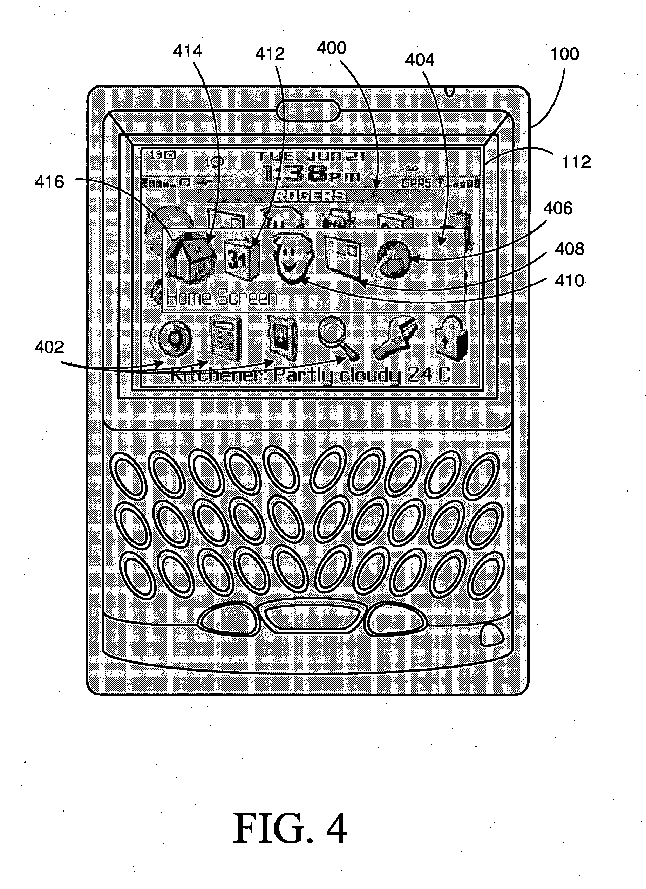

Figure 4 illustrates an exemplary screen 400 shown on display 112. Screen 400 is referred to as a "Home screen" and is associated with system management application module 132. The home screen includes representations 402 of application modules that are stored in memory 104.

In response to an input previously received from a user of device 100, a subscreen 404 is shown in the foreground of display 112, thereby obscuring a portion of screen 400. Subscreen 404 includes representations 406, 408, 410, 412 and 414 of applications that are running on device 100, namely application modules 132, 136, 130, 124 and 131, respectively. In this example the representations are icons, however, other suitable representations such as text are also possible.

A user of device 100 may navigate through representations 406, 408, 410, 412 and 414, and may indicate to device 100 to which of the applications to switch by selecting a corresponding one of the representations. During navigation, the representation to which the user has navigated is emphasized in subscreen 404 with respect to the others. In Figure 4, representation 414 of the home screen is emphasized by a solid circle 416 around it and display of the caption "Home Screen".

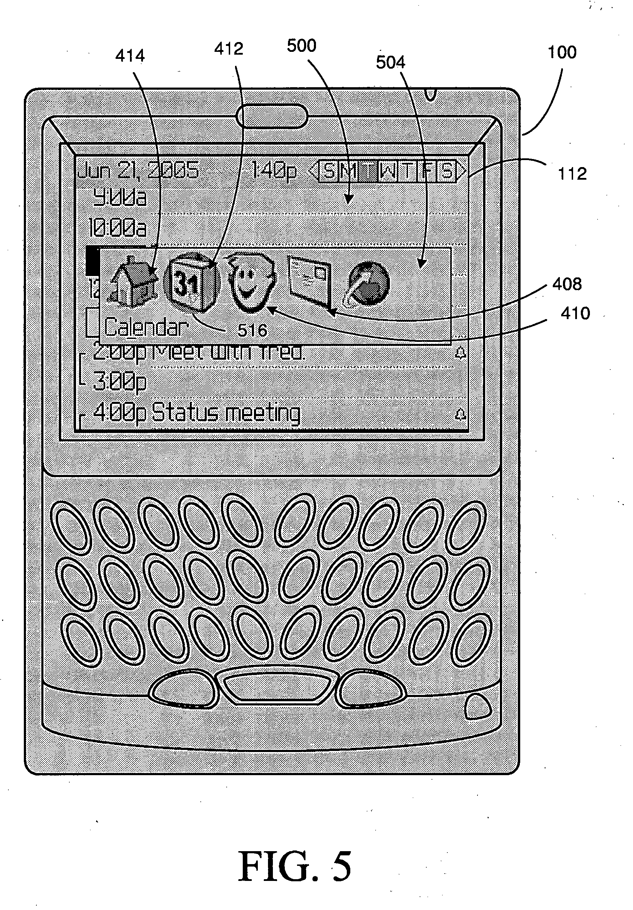

The user may navigate from representation 414 to representation 412 of calendar application module 136. As shown in Figure 5, an exemplary screen 500 of calendar application module 136 is shown in the background of display 112, while a subscreen 504 is shown in the foreground of display 112. Subscreen 504 differs from subscreen 404 in that representation 414 is not emphasized and representation 412 is emphasized by a solid circle 516 around it and display of the caption "Calendar".

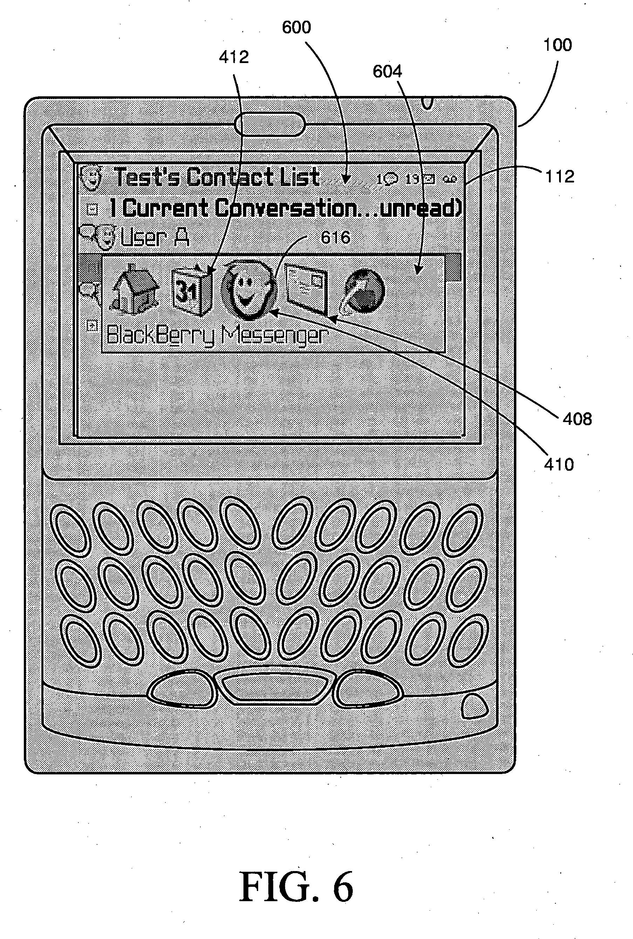

The user may continue to navigate from representation 412 to representation 410 of instant messaging application module 130. As shown in Figure 6, an exemplary screen 600 of instant messaging application module 130 is shown in the background of display 112, while a subscreen 604 is shown in the foreground of display 112. Subscreen 604 differs from subscreen 504 in that representation 412 is not emphasized and representation 410 is emphasized by a solid circle 616 around it and display of the caption "BlackBerry Messenger".

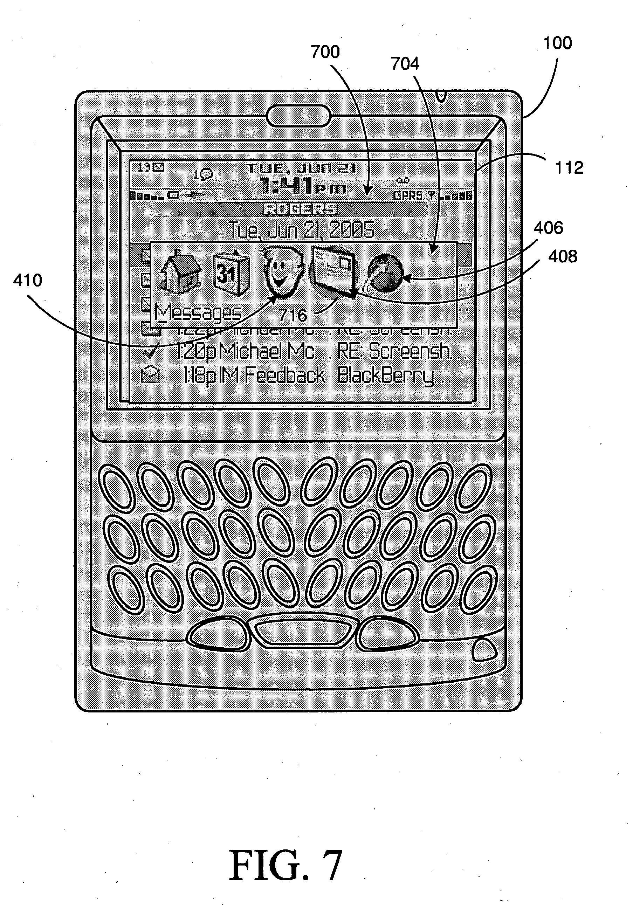

The user may continue to navigate from representation 410 to representation 408 of e-mail application module 124. As shown in Figure 7, an exemplary screen 700 of e-mail application module 124 is shown in the background of display 112, while a subscreen 704 is shown in the foreground of display 112. Subscreen 704 differs from subscreen 604 in that representation 410 is not emphasized and representation 408 is emphasized by a solid circle 716 around it and display of the caption "Messages".

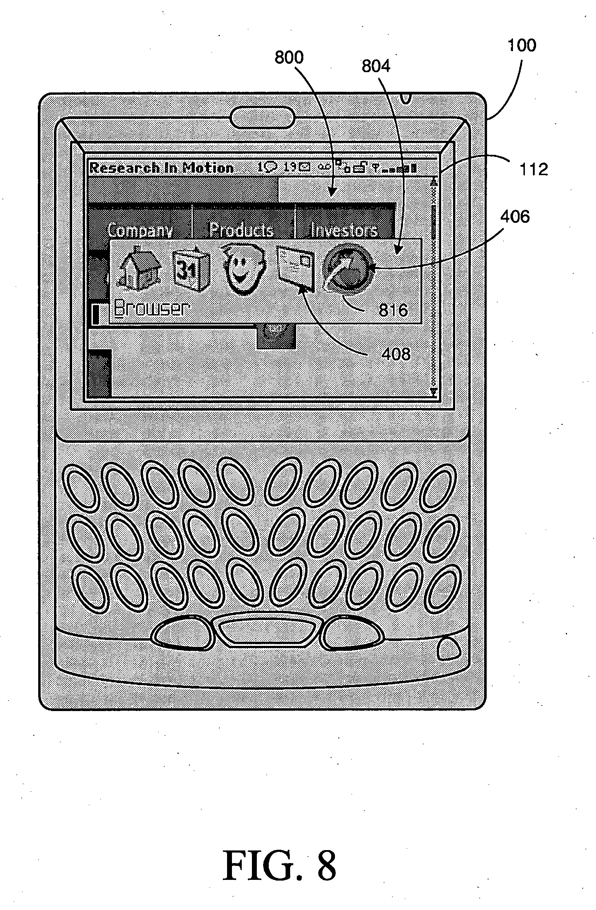

The user may continue to navigate from representation 408 to representation 406 of web browser application module 131. As shown in Figure 8, an exemplary screen 800 of web browser application module 131 is shown in the background of display 112, while a subscreen 804 is shown in the foreground of display 112. Subscreen 804 differs from subscreen 704 in that representation 408 is not emphasized and representation 406 is emphasized by a solid circle 816 around it and display of the caption "Browser".

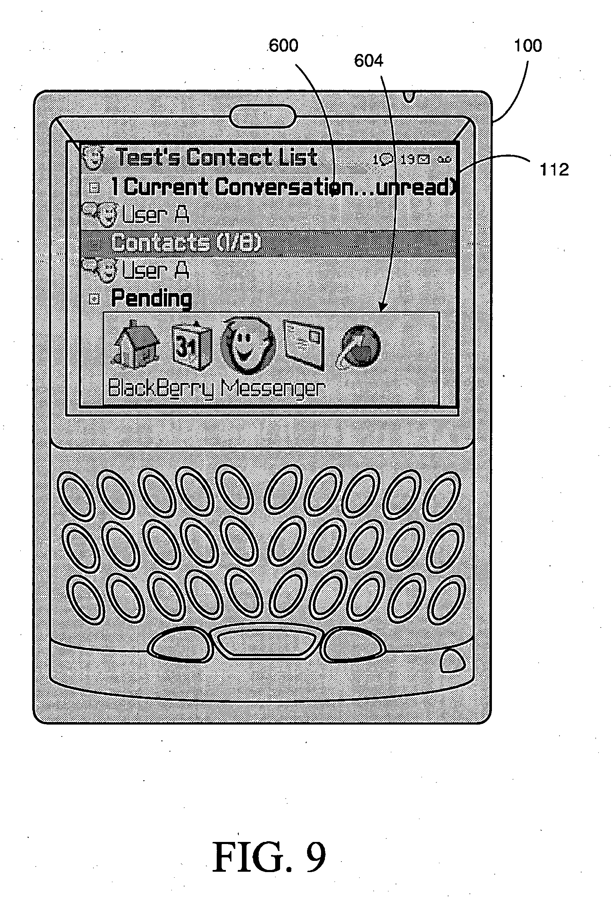

The location of subscreens 404, 504, 604, 704 and 804 in display 112 obscures useful information in screens 400, 500, 600, 700 and 800, respectively. Therefore, a more appropriate location for the representations of the running applications may be as shown in Figure 9, in which subscreen 604 is placed so as to lessen the amount of information in screen 600 that is obscured by the representations in subscreen 604. Subscreens 404, 504, 604, 704 and 804 may be moved in different locations of the screen, for example, top, middle, bottom. The location of the subscreens may be defined by the user using Cartesian coordinates of the screen, or may be pre-selected by the user from a set of options such as top, middle and bottom.

Subscreens 404, 504, 604, 704 and 804 show the representations in a single horizontal row, but more than one horizontal row is also possible. Likewise, one or more vertical columns of representations is also possible, and such subscreens may be located to the left, middle or right of the screen.

Various techniques or a combination thereof may be used to distinguish the subscreens in the foreground of the display from the screens in the background of the display. One such technique is to use a larger or smaller font size for the captions in the subscreens than that used in the screens. Another such technique is to have different colors for the icons in the subscreens than the colors of the icons in the screens. Yet another technique is to generate different sounds as the user navigates from one representation to another in the subscreens than the sounds generated as the user navigates in a screen.

Subscreens 404, 504, 604, 704 and 804 will disappear from display 112 once the user has selected a representation to indicate to which application to switch to.

A non-exhaustive list of examples for communication protocols with which radio 120 may comply includes Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication.

Alternatively, device 100 may be "IEEE 802.11-enabled", which means that radio 120 may comply with one or more of the 802.11 family of standards defined by the Institute of Electrical and Electronic Engineers (IEEE) for Wireless Local Area Network (LAN) Medium Access Control (MAC) and Physical layer (PHY) specifications, other existing WLAN standards or future related standards.

A non-exhaustive list of examples for device 100 includes a cellular phone, a smart phone, a personal digital assistant (PDA), an electronic mail (Email) client, a gaming device, a laptop computer, a notebook computer, a wireless terminal, and any other suitable mobile apparatus.

A non-exhaustive list of examples for processor 102 includes microprocessors, microcontrollers, central processing units (CPU), digital signal processors (DSP), reduced instruction set computers (RISC), complex instruction set computers (CISC) and the like. Furthermore, processor 102 may comprise more than one processing unit, may be part of an application specific integrated circuit (ASIC) or may be a part of an application specific standard product (ASSP).

A non-exhaustive list of examples for memory 104 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antenna 122 includes dipole antennae, monopole antennae, multilayer ceramic antennae, planar inverted-F antennae, loop antennae, shot antennae, dual antennae, omnidirectional antennae and any other suitable antennae.

## Claims

1. A method for enabling a user to switch between applications (124, 126, 128, 130, 131, 132, 134, 136) concurrently running on a device (100) having a display (112) where one of said applications is an active application that will have its screen shown on said display, the method comprising:
while showing a first screen (400) of a current state of a first application (132) on said display (112), said first application being the active application,
showing , in response to an input received from said user, a subscreen (404) comprising representations (406, 408, 410, 412, 414) of said applications (124, 130, 131, 132, 134, 136) in a foreground of said display (112) thereby obscuring a portion of said first screen (400), which remains visible in a background of said display (112);
enabling said user to navigate through said representations (406, 408, 410, 412, 414) and to indicate to which of said applications (124, 126, 128, 130, 131, 132, 134, 136) to switch by navigating to and selecting a corresponding one of said representations (406, 408, 410, 412, 414) using at least one user input element (114);
as said user navigates to a representation (412) of a second application (136), showing a second screen (500) of a current state of said second application (136) on said display (112) instead of said first screen (400) and showing said subscreen (504) in the foreground of said display (112) thereby obscuring a portion of said second screen (500), which remains visible in the background of said display (112); and
removing said subscreen (404, 504) from said display (112) once said user has selected a representation (406, 408, 410, 412, 414) to indicate to which of said applications (124, 126, 128, 130, 131, 132, 134, 136) to switch.

2. The method of claim 1, further comprising:
determining a location for said subscreen (404, 504) that is at the center of said display (112).

3. The method of claim 1, further comprising:
determining a location for said subscreen (404, 504) in said display (112) from a selection made by said user.

4. The method of any one of claims 1 to 3, wherein said representations (406, 408, 410, 412, 414) are icons and said method further comprises:
as said user navigates to an icon of said second application (136), showing in said subscreen (404) a caption for said icon.

5. The method of any one of the preceding claims, further comprising:
as said user navigates to a representation (410) of a third application (130), showing a third screen (600) of the current state of said third application (130) on said display (112) instead of said second screen (500) and showing said subscreen (604) comprising said representations (406, 408, 410, 412, 414) of said applications (124, 126, 128, 130, 131, 132, 134, 136) in the foreground of said display (112) thereby obscuring a portion of said third screen (600) which remains visible in the background of said display (112).

6. A device (100) comprising:
a processor (102) able to concurrently run applications (124, 126, 128, 130, 131, 132, 134, 136);
a display (112) coupled to said processor (102), said display (112) arranged to show a first screen (400) of a current state of a first application (132), said application being an active application, and arranged to show, in response to an input received from a user, a subscreen (404) comprising representations (406, 408, 410, 412, 414) of said applications (124, 126, 128, 130, 131, 132, 134, 136) in a foreground of said display (112) thereby obscuring a portion of said first screen (400), which remains visible in a background of said display (112);
a user input element (114, 116, 118) coupled to said processor (102), said user input element (114, 116, 118) arranged to enable said user to navigate through said representations (406, 408, 410, 412, 414) and to indicate to which of said applications (124, 126, 128, 130, 131, 132, 134, 136) to switch by navigating to and selecting a corresponding one of said representations (406, 408, 410, 412, 414); and
a memory (104) coupled to said processor (102), said memory (104) arranged to store executable code means (140) which, when executed by said processor (102), are arranged to show on said display (112) instead of said first screen (400) a second screen (500) of a current state of the application (130) to a representation (410) of which said user has navigated, where said subscreen (504) shown in the foreground of the display (112) obscures a portion of said second screen (500), which remains visible in the background of said display (112), wherein said executable code means (140) is further arranged to remove said subscreen (404, 504) from said display (112) once said user has selected a representation (406, 408, 410, 412, 414) to indicate to which of said applications (124, 126, 128, 130, 131, 132, 134, 136) to switch.

7. The device (100) of claim 6, wherein said executable code means (140), when executed by said processor (102), are arranged to determine a location for said subscreen (404, 504) that is at the center of said display (112).

8. The device (100) of claim 6, wherein said executable code means (140), when executed by said processor (102), are arranged to determine a location for said subscreen (404, 504) from a selection made by said user.

9. The device (100) of any one of claims 6 to 8, wherein said user input element (114) comprises a keyboard (116), a thumbwheel (118) or a trackball.

10. The device (100) of any one of claims 6 to 9, wherein said representations (406, 408, 410, 412, 414) comprise icons.

11. A computer program product comprising instructions which when executed by a processor (102) of a device (100) result in the device performing the method of any one of claims 1 to 5.

## Patentansprüche

1. Verfahren zum Ermöglichen, dass ein Benutzer zwischen Anwendungen (124, 126,128, 130, 131, 132, 134, 136) umschaltet, die auf einer Vorrichtung (100) gleichzeitig laufen, die eine Anzeige (112) aufweist, wobei eine der Anwendungen eine aktive Anwendung ist, die ihren Bildschirm auf der Anzeige zeigen lassen wird, wobei das Verfahren Folgendes aufweist:
während eines Zeigens eines ersten Bildschirms (400) eines aktuellen Zustands einer ersten Anwendung (132) auf der Anzeige (112), wobei die erste Anwendung die aktive Anwendung ist,
Zeigen eines Teilbildschirms (404) mit Darstellungen (406, 408, 410, 412, 414) der Anwendungen (124, 130, 131, 132, 134, 136) in einem Vordergrund der Anzeige (112) als Reaktion auf eine von dem Benutzer empfangene Eingabe, wodurch ein Abschnitt des ersten Bildschirms (400) verdeckt wird, der in einem Hintergrund der Anzeige (112) sichtbar bleibt,
Ermöglichen, dass der Benutzer durch die Darstellungen (406, 408, 410, 412, 414) navigiert, und dass er durch Navigieren auf und Auswählen einer entsprechenden der Darstellungen (406, 408, 410, 412, 414) unter Verwendung mindestens eines Benutzereingabeelements (114) angibt, auf welche der Anwendungen (124, 126, 128, 130, 131, 132, 134, 136) umgeschaltet werden soll,
während der Benutzer auf eine Darstellung (412) einer zweiten Anwendung (136) navigiert, Zeigen eines zweiten Bildschirms (500) eines aktuellen Zustands der zweiten Anwendung (136) auf der Anzeige (112) anstatt des ersten Bildschirms (400) und Zeigen des Teilbildschirms (504) im Vordergrund der Anzeige (112), wobei ein Teil des zweiten Bildschirms (500) verdeckt wird, der in dem Hintergrund der Anzeige (112) sichtbar bleibt, und
Entfernen des Teilbildschirms (404, 504) von der Anzeige (112) sobald der Benutzer eine Darstellung (406, 408, 410, 412, 414) ausgewählt hat, um anzugeben, auf welche der Anwendungen (124, 126, 128, 130, 131, 132, 134, 136) umgeschaltet werden soll.

2. Verfahren nach Anspruch 1, ferner mit:
Bestimmen eines Ortes für den Teilbildschirm (404, 504), der in der Mitte der Anzeige (112) liegt.

3. Verfahren nach Anspruch 1, ferner mit:
Bestimmen eines Ortes für den Teilbildschirm (404, 504) in der Anzeige (112) aus einer von dem Benutzer getroffenen Auswahl.

4. Verfahren nach einem der Ansprüche 1 bis 3, wobei die Darstellungen (406, 408, 410, 412, 414) Symbole sind und das Verfahren ferner Folgendes aufweist:
während der Benutzer auf ein Symbol der zweiten Anwendung (136) navigiert, Zeigen einer Beschriftung des Symbols in dem Teilbildschirm (404).

5. Verfahren nach einem der vorhergehenden Ansprüche, ferner mit:
während der Benutzer auf eine Darstellung (410) einer dritten Anwendung (130) navigiert, Zeigen eines dritten Bildschirms (600) des aktuellen Zustands der dritten Anwendung (130) auf der Anzeige (112) anstatt des zweiten Bildschirms (500) und Zeigen des Teilbildschirms (604) mit den Darstellungen (406, 408, 410, 412, 414) der Anwendungen (124, 126, 128, 130, 131, 132, 134, 136) im Vordergrund der Anzeige (112), wodurch ein Teil des dritten Bildschirms (600) verdeckt wird, der im Hintergrund der Anzeige (112) sichtbar bleibt.

6. Vorrichtung (100) mit:
einem Prozessor (102), der fähig ist, Anwendungen (124, 126, 128, 130, 131, 132, 134, 136) gleichzeitig zu betreiben,
einer Anzeige (112), die mit dem Prozessor (102) gekoppelt ist, wobei die Anzeige (112) dazu ausgelegt ist, einen ersten Bildschirm (400) eines aktuellen Zustands einer ersten Anwendung (132) zu zeigen, wobei die Anwendung eine aktive Anwendung ist, und dazu ausgelegt ist, als Reaktion auf eine von einem Benutzer empfangene Eingabe einen Teilbildschirm (404) mit Darstellungen (406, 408, 410, 412, 414) der Anwendungen (124, 126, 128, 130, 131, 132, 134, 136) in einem Vordergrund der Anzeige (112) zu zeigen, wodurch ein Abschnitt des ersten Bildschirms (400) verdeckt wird, der in einem Hintergrund der Anzeige (112) sichtbar bleibt,
einem Benutzereingabeelement (114, 116, 118), das mit dem Prozessor (102) gekoppelt ist, wobei das Benutzereingabeelement (114, 116, 118) dazu ausgelegt ist, dem Benutzer zu ermöglichen, durch die Darstellungen (406, 408, 410, 412, 414) zu navigieren und durch Navigieren auf und Auswählen einer entsprechenden der Darstellungen (406, 408, 410, 412, 414) anzugeben, aufwelche der Anwendungen (124, 126, 128, 130, 131, 132, 134, 136) umgeschaltet werden soll, und
einem Speicher (104), der mit dem Prozessor (102) gekoppelt ist, wobei der Speicher (104) dazu ausgelegt ist, ausführbare Codemittel (140) zu speichern, die, wenn sie auf dem Prozessor (102) ausgeführt werden, dazu ausgelegt sind, auf der Anzeige (112) anstatt des ersten Bildschirms (400) einen zweiten Bildschirm (500) eines aktuellen Zustands der Anwendung (130) zu zeigen, auf deren Darstellung (410) der Benutzer navigiert ist, wobei der Teilbildschirm (504), der im Vordergrund der Anzeige (112) gezeigt ist, einen Teil des zweiten Bildschirms (500) verdeckt, der im Hintergrund der Anzeige (112) sichtbar bleibt, wobei die ausführbaren Codemittel (140) ferner dazu ausgelegt sind, den Teilbildschirm (404, 504) von der Anzeige (112) zu entfernen, sobald der Benutzer eine Darstellung (406, 408, 410, 412, 414) ausgewählt hat, um anzugeben, auf welche der Anwendungen (124, 126, 128, 130, 131, 132, 134, 136) umgeschaltet werden soll.

7. Vorrichtung (100) nach Anspruch 6, wobei die ausführbaren Mittel (140) wenn sie von dem Prozessor (102) ausgeführt werden, dazu ausgelegt sind, einen Ort für den Teilbildschirm (404, 504) zu bestimmen, der in der Mitte der Anzeige (112) liegt.

8. Vorrichtung (100) nach Anspruch 6, wobei die ausführbaren Mittel (140) wenn sie von dem Prozessor (102) ausgeführt werden, dazu ausgelegt sind, aus einer von dem Benutzer getroffenen Auswahl einen Ort für den Teilbildschirm (404, 504) zu bestimmen.

9. Vorrichtung (100) nach einem der Ansprüche 6 bis 8, wobei das Benutzereingabeelement (114) eine Tastatur (116), ein Einstellrad (118) oder einen Trackball aufweist.

10. Vorrichtung (100) nach einem der Ansprüche 6 bis 9, wobei die Darstellungen (406, 408, 410, 412, 414) Symbole aufweisen.

11. Computerprogrammprodukt mit Anweisungen, die, wenn sie auf einem Prozessor (102) einer Vorrichtung (100) ausgeführt werden, dazu führen, dass die Vorrichtung das Verfahren nach einem der Ansprüche 1 bis 5 durchführt.

## Revendications

1. Procédé pour permettre à un utilisateur de basculer entre des applications (124, 126, 128, 130, 131, 132, 134, 136) exécutées simultanément sur un dispositif (100) comportant un dispositif d'affichage (112), l'une desdites applications étant une application active qui aura son écran présenté sur ledit dispositif d'affichage, le procédé comprenant :
lors de la présentation d'un premier écran (400) d'un état actuel d'une première application (132) sur ledit dispositif d'affichage (112), ladite première application étant l'application active,
la présentation, en réponse à une entrée reçue à partir dudit utilisateur, d'un sous-écran (404) comprenant des représentations (406, 408, 410, 412, 414) desdites applications (124, 130, 131, 132, 134, 136) dans un avant-plan dudit dispositif d'affichage (112), de façon à obscurcir ainsi une partie dudit premier écran (400), qui reste visible dans un arrière-plan dudit dispositif d'affichage (112) ;
le fait de permettre audit utilisateur de naviguer entre lesdites représentations (406, 408, 410, 412, 414) et d'indiquer vers laquelle desdites applications (124, 126, 128, 130, 131, 132, 134, 134, 136) il faut basculer par la navigation vers l'une desdites représentations (406, 408, 410, 412, 414) et la sélection d'une représentation correspondante de celles-ci à l'aide d'au moins un élément d'entrée d'utilisateur (114) ;
lorsque ledit utilisateur navigue vers une représentation (412) d'une deuxième application (136), la présentation d'un deuxième écran (500) d'un état actuel de ladite deuxième application (136) sur ledit dispositif d'affichage (112) à la place dudit premier écran (400) et la présentation dudit sous-écran (504) dans l'avant-plan dudit dispositif d'affichage (112), de façon à obscurcir ainsi une partie dudit deuxième écran (500), qui reste visible dans l'arrière-plan dudit dispositif d'affichage (112) ; et
le retrait dudit sous-écran (404, 504) dudit dispositif d'affichage (112) une fois que ledit utilisateur a sélectionné une représentation (406, 408, 410, 412, 414) de façon à indiquer vers laquelle desdites applications (124, 126, 128, 130, 131, 132, 134, 134, 136) il faut basculer.

2. Procédé selon la revendication 1, comprenant de plus :
la détermination d'un emplacement pour ledit sous-écran (404, 504) qui se trouve au centre dudit dispositif d'affichage (112).

3. Procédé selon la revendication 1, comprenant de plus :
la détermination d'un emplacement pour ledit sous-écran (404, 504) dans ledit dispositif d'affichage (112) à partir d'une sélection effectuée par ledit utilisateur.

4. Procédé selon l'une quelconque des revendications 1 à 3, dans lequel lesdites représentations (406, 408, 410, 412, 414) sont des icônes et ledit procédé comprend de plus :
lorsque ledit utilisateur navigue vers une icône de ladite deuxième application (136), la présentation dans ledit sous-écran (404) d'une légende pour ladite icône.

5. Procédé selon l'une quelconque des revendications précédentes, comprenant de plus :
lorsque ledit utilisateur navigue vers une représentation (410) d'une troisième application (130),
la présentation d'un troisième écran (600) de l'état actuel de ladite troisième application (130) sur ledit dispositif d'affichage (112) à la place dudit deuxième écran (500) et la présentation dudit sous-écran (604) comprenant lesdites représentations (406, 408, 410, 412, 414) desdites applications (124, 126, 128, 130, 131, 132, 134, 136) dans l'avant-plan dudit dispositif d'affichage (112), de façon à obscurcir ainsi une partie dudit troisième écran (600) qui reste visible dans l'arrière-plan dudit dispositif d'affichage (112).

6. Dispositif (100), comprenant :
un processeur (102) susceptible d'exécuter simultanément des applications (124, 126, 128, 130, 131, 132, 134, 136) ;
un dispositif d'affichage (112) couplé audit processeur (102), ledit dispositif d'affichage (112) étant configuré de façon à présenter un premier écran (400) d'un état actuel d'une première application (132), ladite application étant une application active, et de façon à présenter, en réponse à une entrée reçue à partir d'un utilisateur, un sous-écran (404) comprenant des représentations (406, 408, 410, 412, 414) desdites applications (124, 126, 128, 130, 131, 132, 134, 136) dans un avant-plan dudit dispositif d'affichage (112), de façon à obscurcir ainsi une partie dudit premier écran (400), qui reste visible dans un arrière-plan dudit dispositif d'affichage (112) ;
un élément d'entrée d'utilisateur (114, 116, 118) couplé audit processeur (102), ledit élément d'entrée d'utilisateur (114, 116, 118) étant configuré de façon à permettre audit utilisateur de naviguer entre lesdites représentations (406, 408, 410, 412, 414) et à indiquer vers laquelle desdites applications (124, 126, 128, 130, 131, 132, 134, 136) il faut basculer par la navigation vers l'une desdites représentations (406, 408, 410, 412, 414) et la sélection d'une représentation correspondante de celles-ci ; et
une mémoire (104) couplée audit processeur (102), ladite mémoire (104) étant configurée de façon à mémoriser des moyens de code exécutable (140), qui, lorsqu'ils sont exécutés par ledit processeur (102), sont configurés de façon à présenter sur ledit dispositif d'affichage (112), à la place dudit premier écran (400), un deuxième écran (500) d'un état actuel de l'application (130) vers une représentation (410) de laquelle ledit utilisateur a navigué, ledit sous-écran (504) représenté dans l'avant-plan du dispositif d'affichage (112) obscurcissant une partie dudit deuxième écran (500), qui reste visible dans l'arrière-plan dudit dispositif d'affichage (112), lesdits moyens de code exécutable (140) étant de plus configurés de façon à retirer ledit sous-écran (404, 504) dudit dispositif d'affichage (112) une fois que ledit utilisateur a sélectionné une représentation (406, 408, 410, 412, 414) de façon à indiquer vers laquelle desdites applications (124, 126, 128, 130, 131, 132, 134, 136) il faut basculer.

7. Dispositif (100) selon la revendication 6, dans lequel lesdits moyens de code exécutable (140), lorsqu'ils sont exécutés par ledit processeur (102), sont configurés de façon à déterminer un emplacement pour ledit sous-écran (404, 504) qui se trouve au centre dudit dispositif d'affichage (112).

8. Dispositif (100) selon la revendication 6, dans lequel lesdits moyens de code exécutable (140), lorsqu'ils sont exécutés par ledit processeur (102), sont configurés de façon à déterminer un emplacement pour ledit sous-écran (404, 504) à partir d'une sélection effectuée par l'utilisateur.

9. Dispositif (100) selon l'une quelconque des revendications 6 à 8, dans lequel ledit élément d'entrée d'utilisateur (114) comprend un clavier (116), une molette (118) ou une boule de commande.

10. Dispositif (100) selon l'une quelconque des revendications 6 à 9, dans lequel lesdites représentations (406, 408, 410, 412, 414) comprennent des icônes.

11. Produit de programme informatique, comprenant des instructions qui, lorsqu'elles sont exécutées par un processeur (102) d'un dispositif (100), produisent en résultat l'exécution par le dispositif du procédé selon l'une quelconque des revendications 1 à 5.
